# EUROPEAN PATENT APPLICATION

(11) **EP 3 968 150 A1**
(43) Date of publication of application: **16.03.2022**
(21) Application number: 20195287.6
(22) Date of filing: 09.09.2020
(51) Int. Cl.: G06F 8/656, G06F 9/54

(54) **EMBEDDED CONTROL DEVICE, COMPUTER PROGRAM PRODUCT AND METHOD OF CONTROLLING A CONTROL TARGET**

(71) Applicant: Siemens Aktiengesellschaft, 80333 München (DE)
(72) Inventor: Telschig, Kilian, 81543 München (DE); Piskol, Thomas, 90556 Seukendorf (DE)

(57) **Abstract**

An embedded control device executing a control app for controlling a control target comprises a number of units including: a broker unit providing a message bus enabling serialized publish/subscribe topic-based communication between instances of the control app, the number of units, and the control target; and an updater unit that: in response to a first instance of the control app being executed on the embedded control device, publishes an app-specific update topic on the message bus; and when a second instance of the control app is executed, causes a handover from the first instance to the second instance by transmitting a switch command in the app-specific update topic.

Also provided are a computer program product and a method for controlling a control target.

The invention enables app updates without downtime.

## Description

The present invention relates to the field of industrial control systems, and more particular to an embedded control device, a computer program product to be used with the embedded control device, and a method of controlling a control target.

Embedded devices are used in the field of industrial control to perform a dedicated control function within a control target, the control target being a larger mechanical or electrical system the embedded device is embedded with. Example applications include critical infrastructure, such as power grids, power plants, transformer substations and the like. Herein, an application or app executed by an embedded device calculates output values based on current and historical input values as well as internal state information and the like. The embedded device usually performs its function in real time.

For bug fixing, security patches, functional and/or non-functional improvements, and the like, a maintenance engineer may want to update an app running on an embedded device. Conventionally, the running app is shut down, the new app is downloaded to the embedded device, the embedded device is rebooted, and the new app is started. Operational safety requirements may require to shut down parts of the control target during the update, so as to avoid a critical event in the control target to be "missed" in a time when neither the old nor the new version of the app are responsive. As a result of these difficulties, embedded control devices are scarcely updated, which is a security problem in critical infrastructure.

It is therefore one object of the present invention to improve the updating of an app executed on an embedded control device.

According to a first aspect, an embedded control device configured to concurrently execute a number of control apps for controlling a control target comprises a number of units, the number of units comprising: a broker unit configured to provide a message bus enabling serialized publish/subscribe topic-based communication between any of the number of control apps, the number of units, and the control target; and an updater unit configured to: in response to a first instance of one of the number of control apps being executed on the embedded control device, publish an app-specific update topic on the message bus; and when a second instance of the same control app is executed on the embedded control device, cause a handover of control from the first instance to the second instance of the control app by transmitting a switch command in the app-specific update topic.

That is, advantageously, the switch command that triggers the handover between the first (old) instance of the control app and the second (new, updated) instance of the control app is transmitted as a payload of a command message on the same serialized message bus via which the respective instances communicate with the control target. This may provide the advantage of an atomic handover, so that the control app may be updated without downtime.

Specifically, any control-target related communications occurring on the message bus up to the switch command may be handled by the first instance of the control app, while any control-target related communications occurring on the message bus after the switch command may be handled by the second instance of the control app, without the first instance and second instance having to perform any kind of synchronization processing, simply by the first instance stopping processing the serialized message bus in response to the switch command, and the second instance starting processing of the serialized message bus in response to the switch command.

Herein, in particular, the embedded control device may be a computing device that is connected to and/or embedded within a mechanical and/or electrical system that constitutes the control target. The embedded control device is configured to perform control of the control target, for example, by receiving input values, such as sampled measured values, and calculating and outputting output values, such as commands, setpoints for an actor, rip requests, and the like. The embedded device may operate according to predetermined time constraints that match operational and/or safety requirements of the control target. For example, the embedded device may operate according to real-time or quasi real-time requirements so as to provide real-time or quasi real-time control of the control target.

The control target may comprise any number of controlled devices. In particular, the control target may comprise a number of data sources and data targets. A data source of the control target may be a sensor configured to acquire a measured value, a line configured to output a measured value, another embedded control device, or another computing device, a server device, a cloud, or the like configured to supply measured and/or derived values indicative of a condition of the control target. A data target of the control target may be an actor configured to act upon the control target according to a setpoint value, a line, or another embedded control device, another computing device, a server device, a cloud or the like configured to receive a setpoint value, command, trip request or the like for the control target.

The control app may be embodied by a program code executing on the control device, the program code, when executed by the embedded control device, causing the control device to perform the control of the control target according to a control logic implemented by the program code.

The functionality for publish/subscribed topic-based communication provided by the broker unit, which is referred to herein as "message bus", may include allowing participants of the message bus to: register a topic with the broker unit (so-called "publishing"); subscribe to a topic that is or will be registered with the broker unit (so-called "subscribing"); transmit a message in a topic that the participant has registered with the broker unit; and receive messages in the topic or topics to which the participant is subscribed.

Herein, a participant of the message bus may be each of the apps executed on the embedded control device, each the units of the embedded control device, and the control target (an interface unit of the embedded control device interfacing the message bus with the control target).

The term "message", herein, may refer to data comprising a message header and a payload. The payload may comprise a measured value, a command, a setpoint value, a trip request, status information, handover information, app-specific data, and the like.

The broker unit thus may be configured to distribute a message that it receives in a given topic to all apps that are subscribed to the given topic. The broker unit may provide the message bus via an Application Programming Interface (API) that may be accessible via a local network protocol, via a socket, by functional calls of a client library that is linkable to the respective control app, or the like.

The term "topic", herein, may refer to an identifier, such as a string of characters. The number of topics that are used for communication between the respective instances of the number of control apps and the control target may be agreed in advance in accordance with a control protocol implemented by the control target, the embedded control device and its control apps.

Likewise, for passing control from the first instance to the second instance during an updated of one of the control apps, a number of topics, and semantics and payloads of messages to be transmitted in the number of topics, may be agreed on in advance in accordance with a proposed handover protocol that is implemented by the embedded control device and a control app for the embedded control device.

The embedded control device may further comprise an interface unit that is configured to interface the message bus provided by the broker unit to a signal line physically connectable to the control target. The interface unit may be a part of the broker unit or may be provided as a separate unit of the embedded control device. The respective control app may communicate with the control target via the message bus, in particular, by transmitting messages to and/or receiving messages from the interface unit, in topics it has published and/or it is subscribed to, in accordance with a previously agreed control protocol.

For example, the interface unit may publish a sensor topic and may subscribe to an actor topic on the message bus. The interface unit may then transmit input values received via the signal line from the control target as messages in the sensor topic on the message bus, and the interface unit may transmit a data payload of a message received in the actor topic as an output value, such as a command or setpoint value for the control target, on the signal line. Such communication taking place in the sensor topic and in the actor topic are examples of control target-related communication taking place on the message bus. It will be appreciated that the sensor topic and the actor topic are mere examples and any number of topics can be used for control target-related communication according to the control protocol.

Notably, the message bus enables serialized communication. "Serialized" means, in particular, that the broker unit may distribute messages to the subscribed control apps in the same relative order in which they are received by the broker unit. For example, the broker unit may enqueue any message it receives in any topic, and may, one-by-one, take a respective message from the queue and distribute it to all sub control apps subscribe to the respective topic, before taking and processing a respective next message from the queue.

The "first instance of a control app" may be a control app, and the "second instance of a control app" may be another control app. The control app and the another control app are called "first and second instance of a same control app" to designate, in particular, that both apps implement a corresponding control functionality, wherein the second instance of the control app is an updated version of the first instance of the control app. The "first instance" may also be referred to as "current instance" or "old instance", and the "second instance" may also be referred to as "updated instance" or "new instance". Execution of the second instance on the embedded control device may start at a point in time that is later or substantially later than the point in time at which execution of the first instance starts on the embedded control device.

That is, first and second instance of the same control app implement corresponding control functionality, i.e., the first and second instance may be different versions of a same control app. That is, the first instance and the second instance are apps that may have a same application identifier, but may have different instance identifiers, versions numbers or the like, for example.

The "number of control apps" concurrently executing on the embedded control device may at least comprise the first instance of one control app and the second instance of the same control app implementing, which are concurrently executed on the embedded control device at a time of updating the control app.

It will be appreciated that two or more different control apps, each implementing different functionality, may concurrently execute on the embedded control device. Each of the two or more control apps may be updatable in the manner described herein. That is, for each of the two or more control apps, there may be a respective first instance and a respective second instance of the respective control app. However, for ease of understanding, here and in the following, the term "the control app" is used to refer to "one of the number of control apps", and the terms "first instance" and "second instances" are used to refer to the first instance and the second instances of the one of the number of control apps.

For example, the embedded control device may comprise a node manager unit that interfaces with an operator to receive apps to be installed and/or updated on the embedded control device. The node manager may notify the updater unit of the respective executions of the first instance and the second instance. Alternatively, the updater unit may auto-detect execution of the first instance and the second instance, for example, based on messages transmitted by the respective instances upon startup in an instance-specific topic on the message bus according to the handover protocol.

The term "handover" may refer to an atomic transaction in which the first instance ceases to control the control target and the second instance takes up control of the control target. In particular, the second instance may take up control at the same time at which the first instance ceases to control the control target, that is, the handover may be synchronous or quasi-synchronous with the first instance, and/or may happen at respective times of the first instance and the second instance processing a same position in a serialized queue of messages of the message bus.

According to an embodiment of the first aspect, the updater unit is subscribed to an instance state wildcard topic on the message bus, and is further configured to: in response to receiving a ready-to-prepare message in an instance-specific state topic of the second instance, transmit a prepare-to-switch command in the app-specific update topic; and transmit the switch command in the app-specific update topic in response to having received respective ready-to-switch messages both in the instance-specific state topic of the second instance and in an instance-specific state topic of the first instance.

Thus, advantageously, before the handover occurs, a preparation period is set, during which both the first instance and the second instance may prepare for the handover.

For example, during the preparation period, the second instance may observe the control target-related communication on the message bus that is, at that time, performed by the first instance, may build up internal state information accordingly. Once it has built up the internal state information, it may indicate readiness for the handover by publishing its ready-to-switch message in its instance-specific state topic.

Alternatively, or in addition, the first instance may transmit state information to the second instance and indicate readiness for the handover by publishing its ready-to-switch message in its instance-specific state topic when the sate information has been transmitted.

Alternatively, if no preparation is necessary, a respective instance may transmit the ready-to-switch message directly in response to receiving the prepare-to-switch command.

The ready-to-prepare message may be, according to the handover protocol, a message that indicates an instance's readiness to start preparing for the handover. The instance-specific state topic may be a topic in which, according to the handover protocol, the respective instance of the control app transmits state information message indicating its current state, such as "ready-to-prepare", "preparing", "ready-to-switch", and the like. The instance-specific state topic may be published by the respective instance upon startup.

The wildcard topic may be a topic that indicates readiness of the updater unit to be subscribed to any instance-specific state topic published by any instance of any control app. The broker unit may be configured to, when a participant of the message bus - such as the updater unit - subscribes to a wildcard topic, wait for matching topics - such as the instance-specific state topic - being published on the message bus, and, when a matching topic is published on the message bus, automatically subscribe the subscriber to the matching topic.

According to a further embodiment of the first aspect, the updater unit is further configured to, if any one of the ready-to-switch-messages is not received after a predetermined time from transmitting the prepare-to-switch command, not transmit the switch command, transmit an abort command in the app-specific update topic, and terminate the second instance of the control app.

Thereby, advantageously, the embedded control device may continue to operate normally if the second instance of the control app is faulty and fails during the preparation for the handover.

In response to the abort command, the first instance may undo any preparations it has already made for the handover and may resume normal operation of the control target.

According to a further embodiment of the first aspect, the embedded control device is configured to containerize the number of control apps such that the message bus is the only means of communication available to the number of control apps.

Herein, containerizing may refer to partly or fully isolating the control app from its environment. The message bus may be the only means of communication available to the number of control apps at least in relation to communication with the control target, and more preferably, may be the only means of communication available to each control app in relation to communication with other apps and units of the embedded control device.

Thus, it may advantageously be ensured that only the serialized message bus is used by any control app (any instance thereof) both for control target-related communication and for performing the handover. In this way, it may be ensured that there is a clear temporal order defining the order of occurrence of messages of the handover protocol (such as the switch command, and, optionally, the ready-to-prepare message, the prepare-to-switch command, and the ready-to-switch message) and messages of the control protocol.

According to a further embodiment of the first aspect, the updater unit and the broker unit are implemented as respective ones of the number of apps executed on the embedded control device.

That is, the updater unit and the broker unit may be implemented in software. For example, the proposed solution may be a package of platform apps, such as a broker app and an updater app, that are executing on an embedded control device and convert the embedded control device into the embedded control device according to the first aspect.

According to a further embodiment of the first aspect, the embedded control device comprises the first instance of the one of the number of control apps loaded onto the embedded control device.

According to a further embodiment of the first aspect, the embedded control device comprises the first instance and the second instance of the one of the number of control apps executing on the embedded control device.

According to a second aspect, a computer program product comprises a program code that, when executed on the embedded control device of the first aspect or one of its embodiments, is configured to cause forming the first instance of the one of the number of control apps, and is configured to cause forming of the second instance of the one of the number of control apps.

The computer program product may be embodied as a memory card, USB stick, CD-ROM, DVD which way be inserted into the embedded control device, or as a file which may be loaded onto the embedded control device. For example, such a file may be provided by transferring the file comprising the computer program product from a wired or wireless communication network.

The features of the computer program product of the second aspect and of any of its embodiment also apply to the embedded control device of the first aspect and of any of its embodiments, in particular when comprising the first instance and/or the first instance and the second instance formed by loading the program code of the computer program product of the second aspect onto the embedded control device of the first aspect and executing the program code of the computer program product on the embedded control device.

That is, features, advantages, definitions, and embodiments described herein in relation to the computer program product of the second aspect also apply to the embedded control device of the first aspect and vice versa.

In particular, the computer program product of the second aspect is configured to form the first instance of the control app (the one of the number of control apps), and is also configured to form the second instance of the control app, when executed on the embedded control device of the first aspect.

In other words, what this means is, in particular, that an app instance formed on the embedded control device upon execution of the program code is able to perform all steps of the proposed handover protocol as and when needed. For example, the app instance formed in this way is configured to act as the "second instance" when it is installed as an update for a current instance (first instance) of the control app that it is going to replace. Likewise, the app instance formed in this way is configured to act as the "first instance" when (such as, at a later point in time), another update is installed, by which it itself is going to be replaced.

More particularly, an app instance formed by executing the program code of the computer program product of the second aspect on the embedded control device of the first prospect may, upon startup, determine whether it is the first instance of the control app or the second instance of the control app.

It may be determined that the app instance is the first instance, if no other app instance having the same application identifier is currently executing on the embedded control device. Likewise, it may be determined that the app instance is the second instance, if another app instance having the same application identifier is currently executing on the embedded control device.

Alternatively, information as to whether the app instance is the first instance, or the second instance may be given to the app instance by the updater unit or by an external operator. For example, a maintenance operator may decide whether to install the computer program product as a first install or as an update install. Alternatively, the app instance may, for example, observe messages on the message bus, such as messages in a respective instance-specific state topic, to learn whether a previous instance is already executing on the embedded control device or not.

According to an embodiment of the second aspect, the program code is configured to cause that, upon startup: the first instance and the second instance subscribe to the app-specific update topic; the first instance enters an operating state of controlling the control target by communicating with the control target through the message bus; and the second instance enters an observing state of passively observing communications related to the control target on the message bus; and, in response to receiving the switch command in the app-specific update topic: the second instance transitions from the observing state to the operating state; and the first instance transitions from the operating state to a switched-out state of not operating the control target.

That is, if the app instance is the first instance, it can directly enter the operating state and assume control of the control target. However, if it is the second instance, it can enter the observing state. In the observing state, the second instance can observe how the control target is currently being operated by the first instance, to initialize and collect state information about the control target. In this way, the second instance can prepare for the handover and can advantageously already know a history of operation of the control target, may have access to a sliding window of input data, etc., when it is switched in by the switch command.

Thus, according to the proposed handover protocol, the second app instance observes the message bus before being switched in. Furthermore, the switch command is transmitted in the app-specific update topic, to which both instances are subscribed. Thereby, it is possible to realize an atomic, synchronous, and smooth handover without downtime that retains state information.

The switched-out state maybe a shutdown state, or it may be a post-switch state in which the first instance performs cleanup steps such as transmitting post-switch information to the second instance, as will be discussed further below.

According to a further embodiment of the second aspect, the program code is configured to cause that upon startup, the first instance and the second instance each publish a respective instance-specific state topic on the message bus; the second instance transmits a ready-to-prepare message in its instance-specific state topic when a minimum required amount of said observing is completed; and, in response to receiving a prepare-to-switch command in the app-specific update topic, each of the first instance and the second instance prepare for the handover and transmit a ready-to-switch message in their respective instance-specific state topics when the respective preparing is completed.

That is, a handover protocol is proposed that involves a ready-to-prepare message, a prepare-to-switch command, a ready-to-switch message, and a switch command. The protocol may have, in particular, the following advantages:
The publishing of the respective instance-specific state topic may enable the updater unit of the embedded device to detect start-up of the respective app instance and to track its respective state.

The ready-to-prepare message transmitted by the second instance after startup may serve as a trigger to initialize processing to prepare for and execute the handover.

The prepare-to-switch command may be transmitted by the updater unit of the control unit. As it is transmitted in the app-specific update topic, it reaches both the first instance and the second instances and may trigger execution of corresponding preparation steps by each of the instance. The preparation may include the second instance passively collecting state information and/or the first instance transmitting state information to the second instance.

The two ready-to-switch messages may serve as a trigger for the updater unit sending the switch command. I.e., the updater unit may wait until all preparations by each of the instances are complete and only then send the switch command.

According to a further embodiment, the preparing for the handover comprising the first instance transmitting handover information to the second instance in an app-internal topic on the message bus.

The handover information may, for example, comprise state information that has been collected by the first instance during a time period that started before the second instance has entered the observing state. In this way, the second instance does not have to rely solely on its own observations of the message bus, but rather, a full state transfer may be made prior to the handover.

The app-internal topic may be a predetermined topic that is, for example, published by the app instance if it is the first instance, and is subscribed to by the app instance if it is the second instance. The app-internal topic may only be known to and used by instances of the control app and may not be known to and not used by instances of other control apps and/or units of the embedded control device.

According to a further embodiment, the program code is configured to cause that, in response to receiving the switch command in the app-specific update topic, the second instance transitions into a post-switch state of continuing to observe the message bus and waiting for receiving post-switch information from the first instance in an app-internal topic before transitioning from the post-switch state to the operating state, and the first instance, after transitioning from the operating state to the post-switched state, transmits the post-switch information to the second instance in the app-internal topic.

The post-switch information may include information that cannot be transmitted before the actual handover has occurred. One example of post-switch information may be a handle to a resource that is used for controlling the control target and that requires exclusive access.

Since both control target-related messages and handover-related messages are always transmitted over the serialized message bus, so that each of the instances sees all input values that are received at any point in time from the control target, a smooth atomic handover without downtime may be possible also in the present embodiment when post-switch information needs to be transmitted before the second instance can assume full control.

According to a further embodiment of the second aspect, the program code is configured to cause that, in response to receiving the switch command in the app-specific update topic, the second instance remains in the observing state and waits for an app-specific condition becoming true before transitioning from the observing state to the operating state; and the first instance remains in the operating state and waits for the app-specific condition becoming true before transitioning from the operating state to the shutdown state.

The app-specific condition may be a condition defined relative to a state or condition of the control target. In particular, the app-specific condition may be a condition defined relative to information available to the first entity and to the second entity through observing the message bus, such as input values received from the control target.

The app-specific condition may include expiry of a timer, a measured value transmitted from the control target reaching or exceeding (upwards or downwards) a predetermined value, for example a rotor position reaching a certain angle, and the like.

In this way, advantageously, the program code may ensure that the first instance is able to complete a control cycle of the control target before the handover to the next instance occurs. Herein, advantageously, the updater unit of the embedded control device (updater unit) does not need to know the control cycle of the control target. The program code can compensate for an "untimely" switch command issued by the updater unit by waiting for the app-specific condition to become true. Still, when the app-specific condition is defined versus information available on the message bus and/or versus an objective external clock or the like, it can be ensured that the handover occurs synchronously, i.e., an atomic handover without downtime may be achieved.

According to a further embodiment of the second aspect, information indicating the app-specific condition is included in the handover information transmitted from the first instance to the second instance.

That is, the proposed handover protocol advantageously provides for a way in which the first instance can instruct the second instance about when a handover is possible.

Any embodiment of the first or second aspect may be combined with any embodiment of the first or second aspect to obtain another embodiment of the first or second aspect, respectively.

According to a third aspect, a method for controlling a control target comprises: executing the program code of the computer program product according to the second aspect or any of its embodiments on the embedded control device of the first aspect or any of its embodiments to form the first instance of the control app; and, after the program code has been updated, executing the updated program code on the embedded control device of the first aspect or any of its embodiments to form the second instance of the control app according to the second aspect or any of its embodiments.

The embodiments and features described with reference to the embedded program device and/or the computer program product of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a functional diagram of an embedded control device and a control target according a to a first exemplary embodiment;
Fig. 2 shows a functional diagram of a computer program product according to the first exemplary embodiment;
Fig. 3 shows a method of operating the control target according to the first exemplary embodiment;
Fig. 4 shows a functional diagram of an embedded control device and a control target according a to a second exemplary embodiment at a time of performing an update;
Fig. 5 shows a first part of a state diagram of a control app according to the second exemplary embodiment;
Fig. 6 shows a second part of the state diagram of the control app according to the second exemplary embodiments;
Fig. 7 shows a first part of a state diagram of a control app according to a third exemplary embodiment;
Fig. 8 shows a second part of the state diagram of the control app according to the third exemplary embodiment;
Fig. 9 shows a timing diagram of messages transmitted on a message bus according to the third exemplary embodiment; and
Fig. 10 shows messages transmitted on the message bus according to exemplary embodiments.

In the Figures, like reference numerals designate like or functionally equivalent elements, unless otherwise indicated.

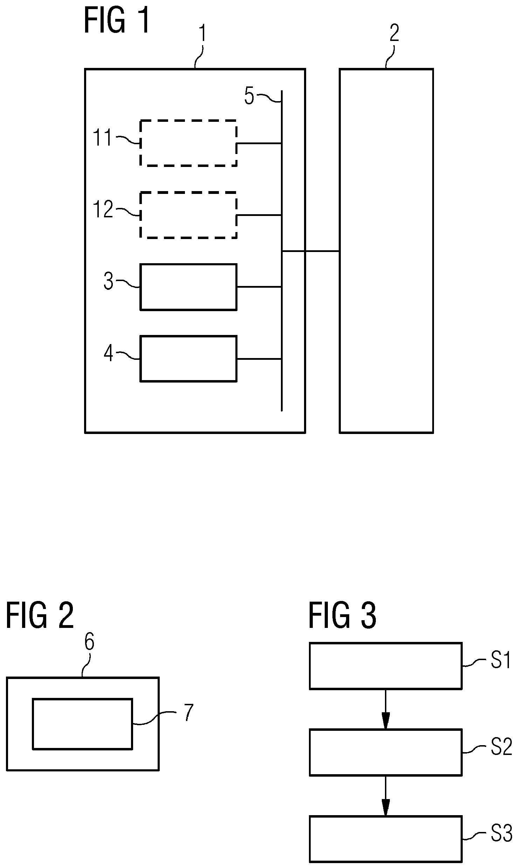

A first exemplary embodiment will be described in relation to Fig. 1, Fig. 2 and Fig. 3, which show, respectively, a functional diagram of an embedded control device 1 and a control target 2, a functional diagram of a computer program product 6, and a flow chart of a method for controlling the control target 2 according a to the first exemplary embodiment.

The embedded control device 1 is embedded into and/or connected to a control target 2.

The skilled person will appreciate that on a structural level (not shown in the figures), the embedded control device may comprise a central processing unit (CPU), a memory device, such as a RAM, a storage unit, such as an EEPROM, a timer unit, and the like. Code may be loaded onto the storage unit. The processing unit may execute program code to be loaded from the storage unit into the memory unit. The code may refer to the timer unit in order to comply to a predetermined real-time requirement, and the like.

On the functional level, the embedded control device 1 comprises a broker unit 3 and an updater unit 4 and is furthermore configured to execute a number of control apps. Fig. 1 shows two instances 11, 12 of a same control app that are loadable onto and executable on the embedded control device 1. The instances 11, 12 are shown in broken lines to indicate that at the beginning of execution of the method of Fig. 3, they are not yet loaded onto, or comprised by, the embedded control device 1.

When the embedded control device 1 is operating, the broker unit 3 provides a message bus 5 that enables serialized publish/subscribe topic-based communication between any of the instances 11, 12 of the number of control apps, the broker unit 3, the updater unit 4, and the control target 2.

That is, when loaded onto and executing on the embedded control target 1, the respective instance 11, 12 of the control app control can control the control target 2 by transmitting and receiving messages in control target-related topics on the serialized message bus 5.

Furthermore, when the embedded control device 1 is operating, the updater unit 4 transmits and receives messages in an update-related topic on the message bus 5 in accordance with a proposed handover protocol. The updater unit 4 that operates according to the proposed handover protocol enables updating of a control app (that is, handover of control from the first instance 11 to the updated second instance 12) without downtime.

The computer program product 6 comprises a program code 7 that is configured to form a first instance 11 and/or a second instance 12 of a same control app when executed on the embedded control device 1. More specifically, the program code 7 is configured to form the second instance 12 of the control app when a first instance 11 of the control app is already executing on the control device 1, and is configured to form the first instance 11 if no instance of the control app is already executing on the control device 1.

Specifically, the first and second instances 11, 12 of the control app formed by the program code 7 when executed on the embedded control device 1 are configured to adhere to the proposed handover protocol that is implemented by the updater unit 4.

The proposed method of controlling the control target 2 comprises the steps S1 to S3 visualized in Fig. 3.

In step S1, the program code 7 of the computer program 6 is executed on the embedded control device 1, thereby forming the first instance 11 of the control app.

Upon startup, the first instance 11 enters an operating state in which it controls the control target 2 by communicating with the control target 2 through the message bus 5.

Further, upon startup of the first instance 11 on the embedded control device 1, the updater unit 4 publishes an app-specific update topic on the message bus 5, to which the first instance 11 subscribes.

After some time, in step S2, the program code 7 of the computer program product 6 is updated. For example, a functional part (control logic, and the like) of the program code may be dated.

In step S2, the updated program code 7 of the computer program product 6 is executed on the embedded control device 1, thereby forming the first instance 12 of the control app. Herein, the computer program product 6 concurrently executes the first instance 11 and the second instance 12.

Upon startup, the second instance 12 subscribes to the app-specific update topic to which the first instance 11 is also subscribed.

The first instance 11, the second instance 12, and the updater unit 4 then perform actions in accordance with the proposed handover protocol to cause a handover of control of the control target 2 from the first instance 11 to the second instance 12.

Specifically, in accordance with the proposed handover protocol, the updater unit 4 causes the handover of control by transmitting a message comprising a switch command in the app-specific update topic on the message bus 5.

In response to receiving the switch command, the first instance 11 ceases to control the control target 2, and the second (updated) instance 12 takes up control of the control target 2.

Herein, it is noted that the broker unit 4 provides for serialized publish/subscribed topic-based communication on the message bus 5.

For example, upon receiving a respective message, the broker unit 4 may add the respective message to the tail of a message queue. The broker unit 4 may process the message queue by taking a respective message from the head of the message queue and transmitting it to all apps and units that have subscribed of the topic in which the message was transmitted (subscribers). After transmission of the message is complete, the broker unit 4 may take a next message from the head of the queue and proceed in the same manner. Likewise, a respective subscriber 3, 4, 11, 12 may enqueue received messages in the same way. In this way, it may be ensured that any subscriber 3, 4, 11, 12 receives any transmissions in the topics it is subscribed to in the same order as any other subscriber 3, 4, 11, 12 that is, inter alia, subscribed to the same topics, thereby achieving a serialized message bus 5.

In this way, the handover protocol implemented by the updater unit 5 in combination with the serialized message bus 5 provided by the broker unit 4 advantageously can ensure that a well-defined atomic handover takes place, in which messages from the control target 2 transmitted on the message bus 5 before the handover performed in response to the switch command are handled by the first instance 11, messages from the control target 2 transmitted on the message bus 5 after the handover performed in response to the switch command are handled by the second instance 12, no message transmitted from the control target 2 on the message bus 5 goes untreated, and on the other hand also no message transmitted from the control target 2 on the message bus 5 is processed twice (i.e. by both the first instances 11 and the second instance 12).

Thereby, the control app formed by executing the computer program product 6 on the embedded control device 1 may be updated online, atomically, and without any downtime of the embedded control device 1 and/or the control target 2.

In the following, a second and a third exemplary embodiment are described. The second and third exemplary embodiments relate to a mixed software/hardware architecture that is based on the general principles outlined hereinabove for the first exemplary embodiment but discloses additional details of modes of carrying out the present invention.

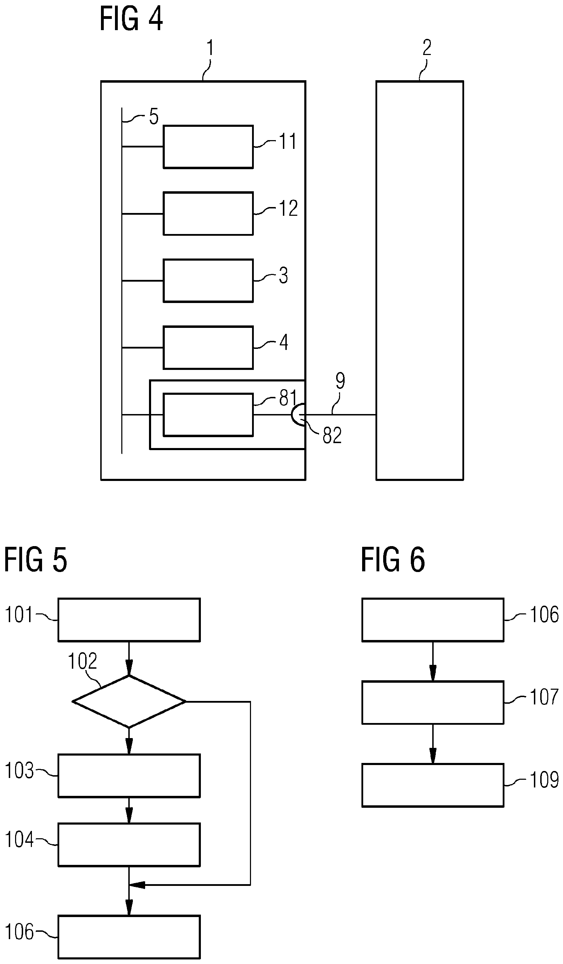

Fig. 4 shows a functional diagram of the embedded control device 1 of the second exemplary embodiment. Herein, the embedded control device 1 is shown in a state comprising the first instance 11 and the second instance 12 of a same control app at a time just after the second instance 12 has been loaded onto the embedded control device 1 and a handover is about to be performed.

According to the software architecture of the second embodiment, the broker unit 3 and the updater unit 4 are implemented as respective apps (so-called platform apps) executing on the embedded control device 1.

Furthermore, the embedded control device 1 of the second embodiment comprises an interface unit 8. The interface unit 8 comprises a hardware connector 82 that is connected to the control target 2 using a physical signal line 9. The interface unit 8 further comprises an interface app 81 that is a participant of the message bus 5 provided by the updater unit 4. The interface unit 8 (interface app 81 and connector 82 when working in conjunction) is configured to enable subscribers 11, 12, 3, 4 of the message bus 5 to communicate with the control target 2 via the physical signal line 9 by transmitting and receiving messages on the message bus 5. The interface app 81 is a further platform app executing on the embedded control device 1.

The instances 11, 12 of the control app are containerized, and the message bus 5 provided by the broker unit 3 is the only means of communication available to the instances 11, 12 for communicating with each other and for communication with the updater unit 4 and the interface unit 8 (control target 2) .

In particular, the serialized publish/subscribe topic-based communication provided by the message bus 5 according to the second exemplary embodiment may be realized as follows. The broker unit 3 is a platform app running on top of an embedded operating system of the embedded control device 1. In addition, a message bus client library is linked to each app. Herein, the term "app" may refer to the instances 11, 12 of the content app, to an app of the broker unit 3 itself, to an app of the updater unit 4, and to the app of the interface unit 8. The message bus client library may be linked to the apps 3, 4, 8, 11, 12 at build time, such as when creating the computer program product 6 (Fig. 2). Alternatively, the embedded control device 1 (its operating system or the like) may link the message bus client library to the respective app 3, 4, 8, 11, 12 upon startup at runtime.

In particular, using the message bus client library, the apps 3, 4, 81, 11, 12 can connect to the broker unit 3, publish a new topic, subscribe to an existing or a not-yet-existing topic, transmit messages in topics they have published, and receive - for example, via callbacks that they provide to the message bus client library -, messages in topics they have subscribed. Topics are identified either via a fixed string (e.g. "/app1/topic1") or using a wildcard string (e.g. "/fixed1/*/fixed2"), wherein the asterisk '*' matches any sequence of characters without slashes. Each topic may only be published by one app 3, 4, 81, 11, 12. Wildcards can be used for subscriptions only. After subscribing to a topic, the message bus client library of the subscribing instance 3, 4, 81, 11, 12 is notified by the broker unit 3 about all matching topics at the time of the subscription and about every matching topic as and when such a matching topic is published at a later point in time. The message bus client library automatically subscribes such matching topics. In this way, the subscribers 3, 4, 81, 11, 12 may subscribe to a topic before it is created. This is especially useful for wildcard subscriptions. In the case of a wildcard subscription, additional matching topics, that are published at a later time (i.e., after the wildcard subscription took place), will be subscribed to automatically.

In this way, a sender/multiple-receiver communication may be realized: The publishing subscriber 3, 4, 81, 11, 12, that has published a given topic can transmit messages in said topic. These messages are transmitted from its message bus client library to the broker unit 3. The broker unit 3 multicasts the messages to all apps 3, 4, 81, 11, 12 that are subscribed to the topic at that time. In this way, the message bus 5 abstracts away a physical communication channel and protocol, as used within the embedded control device 1 and/or on the signal line 9.

Furthermore, similar to the first exemplary embodiment described above, the message bus 5 of the second exemplary embodiment processes all incoming messages strictly sequentially, both at the broker unit 3 side and at the message bus client library side.

The updater unit 4 of the second exemplary embodiment implements a proposed handover protocol that will be described in detail herein below.

During initialization, the updater unit 4 (the app embodying the updater unit 4 according to the second exemplary embodiment) subscribes to the wildcard topic "/STATE/*" so as to receive state change messages from any app3, 4, 81, 11, 12 that adheres to the proposed handover protocol.

Fig. 5 and Fig. 6 show respective parts of a state diagram of a control app 11, 12 according to the second exemplary embodiment. In the following, reference is made to Fig. 5 and 6 in conjunction with Fig. 4 and Fig. 2.

In particular, any control app 11, 12 that wants to benefit from the advantages of being able to be upgraded on-line and without downtime of the present invention is expected to implement at least some of the states shown in the state diagram of Fig. 5 and Fig. 6. In particular, the state diagram shown in Fig. 5 and Fig. 6 may describe states assumed by the first instance 11 and the second instance 12 of the updatable computer program product 6 to be described hereinbelow.

That is, upon startup, the app instance 11, 12 enters an initializing state 101. In the initializing state 101, the app instance 11, 12 publishes and subscribes to various topics. In particular, according to the proposed handover protocol, the app instance 11, 12 publishes an instance-specific state topic "/STATE/<uid>". Herein, "<uid>" is an instance identifier that is unique for each app instance 11, 12. The instance-specific state topic is used to communicate information on the current state (such as the ready-to-prepare, ready-to-switch discussed hereinbelow, and/or states 101 to 108 shown in Fig. 5, 6) of the respective app instance 11, 12 to the updater unit 4.

Furthermore, the app instance 11, 12 subscribes to an app-specific state topic "/UPD/<appid>". Herein, "<appid>" is an app identifier that is shared between the first instance 11 and the second instance 12 of the same control app. The app-specific state topic is used to receive, from the updater unit 4, commands regarding state transitions so as to perform the atomic handover.

Furthermore, the app instance 11, 12 subscribes to and/or publishes various control target-related topics that enable it to communicate, via the interface unit 8, with the control target 2.

The app instance 11, 12 then makes a decision 102 as to whether the app is the first instance 11 or the second instance 12. In particular, the app instance 11, 12 is the first instance 11 if it is installed as a new control app, and the app instance 11, 12 is the second instance 12, if it is installed as an update to an already installed control app.

It the app is the first instance 11, it skips states 103 and 104 and starts up normally to reach operating state 106.

In operating state 106, the first instance 11 operates normally, that is, it communicates with the control target 2 via the message bus 5 so as to control the control target 2. That is, the first instance 11 may receive input values from the control target 2 in a control target-related topic on the message bus 5. The first instance 11 may use a control logic implemented in its program code 7 to calculate output values based in the received input values. The first instance 11 may transmit the calculated output values to the control target 2.

If, however, the app is the second instance 12, it proceeds to state 103. In state 103, the second instance 12 is in an observing state in which it passively observes the abovementioned control target-related communications on the message bus 5. That is, the second instance 12 receives messages in the control target-related topics that are being transmitted by the control target 2 (interface unit 8) and by the first instance 11 (which, at that time, is in operation state 106). However, the second instance 12 is in the observing state 103 and remains self-muted and discards any outputs that its control logic would transmit if it were in the operating state 106.

According to a preferred variant of the second exemplary embodiment, after having observed a sufficient amount of data in the control target-related topics it is subscribed to, the second instance 12 may transmit a ready-to-prepare message in its instance-specific state topic. The ready-to-prepare message is a message indicating to the updater unit 4 that the second instance 12 is ready to enter preparation state 104.

The "sufficient amount of data" is an amount of data that allows the second instance 12 to initialize internal state information required by its control logic. For example, the control logic may require obtaining a sliding window of measured values from the control target 2 before being able to take over control of the control target 2. In this case, the "sufficient amount of data" is the size of the sliding window.

The second instance 12 then waits for a prepare-to-switch command transmitted by the updater unit 4 in the app-specific update topic.

Herein, the prepare-to-switch command is transmitted by the updater unit 4 in response to the ready-to-prepare message transmitted by the second instance 12. Since the prepare-to-switch command is transmitted in the app-specific update topic, to which both the first instance 11 and the second instance 12 are subscribed, it is seen by both instances 11, 12.

In response to the prepare-to-switch command transmitted in the app-specific update topic, the second instance 12 transitions into preparation state 104 to prepare for being switched in, and the first instance 11 switches into the preparation state 107 to prepare for being switched out.

For example, in the preparation state 107, the first instance 11 can transmit handover information in an app-internal topic such as "/<appid>/KeyStats", and the second instance 12 can correspondingly receive the handover information in the app-internal topic. The handover information may comprise longer term state information or statistics that were collected, at least in part, in a time period before the second instance 12 was started on the embedded control device 1.

It is noted that, in the preparation states 104 and 107, the first instance 11 continues to operate normally by actively communicating with the control target 12, and the second instance 12 continues observing the message bus 5 to further update its internal state information according to the latest observed communications. That is, preparation and operation/observing is being carried out in parallel by the respective instances 11 and 12. The preparation states 104 may therefore be regarded as a sub-state of the observing state 103, and the preparation state 107 may be regarded as a sub-state of the operation state 106.

According to the preferred variant, each of the first instance 11 and the second instance 12 transmits a ready-to-switch message in its respective instance-specific topic when its respective preparing for being switched in/out is complete.

In response to having received both ready-to-switch messages, the updater unit 104 transmits a switch command in the app-specific update topic.

It is noted that the preparation states 104, 107 are optional states of a preferred variant of the second exemplary embodiment. Some control apps may not require any preparation before being switched in. In this case, the first instance 11 and the second instance 12 may transmit the ready-to-switch message directly in response to receiving the prepare-to-switch command.

The transmitting of the ready-to-switch messages and the prepare-to-switch commands may also be omitted altogether. In this case, the updater unit 104 may simply transmit the switch command after a predetermined amount of time has elapsed after startup of the second instance 12.

Reverting again to the description of the second exemplary embodiment in its basic form, in response to receiving the switch command in the app-specific update topic, the second instance 12 transitions from the observing state (this may be state 103 and/or state 104, during which the observing continues) to the operating state 106, and the first instance 12 transitions from the operating state (this may be state 106 and/or state 107, during which operating continues) to the state 109, which is a shutdown state.

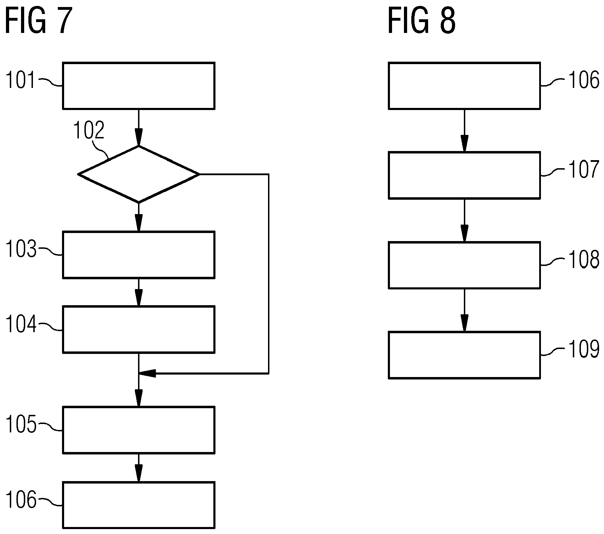

Fig. 7 and Fig. 8 show a state diagram of a control app according to a third exemplary embodiment. The third exemplary embodiment is based on the second exemplary embodiment, and descriptions of common features of the second and third exemplary embodiments will not be repeated.

The third exemplary embodiment differs from the second exemplary embodiment in that, after having received the switch message in the app-specific topic, the first instance 11 does not directly enter the operating state 106, but transitions into a post-switch state 105, and the second instance 11 does not directly enter the switched-out shutdown state 109, but transitions into a post-switch state 108.

According to one preferred variant of the third exemplary embodiment, the following post-switch operations are performed in post-switch states 105 and 108, respectively. That is, for certain applications, in spite the fact that state information has been transferred from the first instance 11 to the second instance 12 prior to indicating readiness for handover, there may be additional conditions that may need to be met before the handover can be performed. One example is a dynamic app-specific handover condition, such as completion of a complete control cycle of the control target 2, a measured value transmitted from the control target 2 reaching a certain defined value, such as zero, or decreasing below a certain safety threshold, etc. In the present variant, the first instance 11 continues to operate normally in its post-switch state 108, and the second instance 11 continues to passively observe the message bus 5 in its post-switch state 105, until in one of the control target-related topics, a message is received from the control target 2 which makes the app-specific condition become true. The message which makes the app-specific condition become true serves as a trigger for the handover, in which the first instance 11 transitions from the post-switch state 108 to the shutdown state 109, and the second instance 12 transitions from the post-switch state 105 to the operating state 106.

It is noted that the app-specific condition may be hard-coded into the first instance 11 and the second instance 12. Alternatively, the first instance 11 may dynamically determine the app-specific condition during the preparation done in the preparation state 107 and may include information indicating the app-specific condition into the handover information that is transmitted from the first instance 11 to the second instance 12 in the preparation states 104, 107.

According to another preferred variant of the third exemplary embodiment, the following post-switch operations are performed in the respective post-switch states 105, 108. That is, for certain control tasks, the control app (its instances 11 and 12) may require exclusive access to a resource, such as a device driver, a socket, and the like, to be able to control the control target 2. In such a scenario, the first instance 11 may stop controlling the control target 12 in response to receiving the switch command in the app-specific update topic upon entering the post-switch state 108, may release the resource, and may transmit a resource handle for accessing the resource as post-switch information to the second instance 12 using the app-internal topic. The second instance 12 may continue passively observing the message bus 5 in the post-switch state 105 and may wait for receiving the post-switch information in the app-internal topic. Upon receiving the post-switch information including the resource handle, the second instance 12 may allocate the resource using the received handle and may then switch into the operating state 106.

In this variant, it is noted that responsibility for processing messages in the control-target related topics has moved from the first instance 11 to the second instance 12 immediately upon receiving the switch command. However, the second instance 12 can only assume control of the control target 2 after a certain delay, i.e. when it has received the post-switch information.

In order to ensure a smooth handover, therefore, the first instance 11 may continue to apply its control logic to input values received in the control target-related topics while in the post-switch state 108, may preliminarily calculate output values to be transmitted to the control target 2, but may not transmit the output messages to the control target 2. Instead, the first instance 11 may include the preliminarily calculated output values into the post-switch information to be transmitted to the second instance 12. The second instance 12 may transmit the preliminarily calculated output values included in the post-switch information once it has assumed control of the control target 2, and before starting to apply its own control logic to calculate further output values.

Alternatively, the second instance 12 may observe the message bus 5 in the post-switch state 105, may preliminarily calculate output values according to its (updated) control logic, and enqueue the preliminarily calculated output messages. The second instance 12 may then transmit the enqueued calculated output messages once it has assumed control of the control target 2 after receiving the post-switch information.

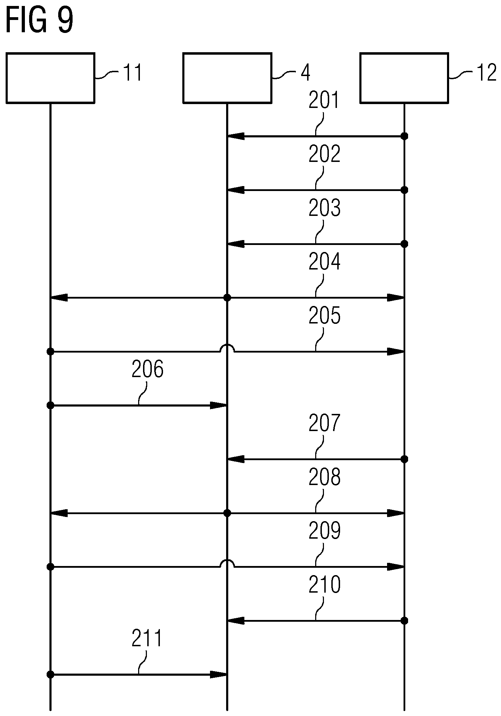

Fig. 9 shows a timing diagram of messages transmitted on a message bus 5 according to the third exemplary embodiment. In the following, reference is made to Fig. 9 in conjunction with Fig. 4 to 8.

The timing diagram of Fig. 9 shows the first instance 11 on the left, the updater unit 4 in the middle and the second instance 12 on the right. A vertical axis in Fig. 9 is a time axis progress downwards, and horizontal arrows indicate messages 201-211 being multicasted via the message bus 5. Herein, a dot indicates a point of origin of the respective message 201-211 (from where it is transmitted) and the arrow tips indicate recipients of the respective messages 201-211. It is noted that a horizontal arrow in Fig. 9 may have more than one arrow tip, since multiple subscribers can subscribe to the same topic on the message bus 5, but always has a single origin.

As has been described hereinabove with reference to the second and third exemplary embodiments, the proposed handover protocol may be summarized as follows:
The second instance 12 publishes an instance-specific state topic and uses it to transmit state messages 201, 202, 203, 207 and 210 which are received by the updater unit 4, which is subscribed to a wildcard topic that matches all instance-specific state topics. The state messages 201, 202, 203, 207, and 210 transmitted by the second instance 12 include an initialization message 201, an observing message 202, a ready-to-prepare message 203, a ready-to-switch message 207 and a normal message 210.

The initialization message 201 indicates the second instance 12 having entered the initialization state 101, and the observing message 202 indicates entering of the observing state 103. The initializing message 201 makes the updater unit 4 aware of the fact that the second 12 is now executed on the embedded control device 1. The observing message 202 may be ignored by the updater unit 4.

The ready-to-prepare message 203 transmitted from the second instance 12 to the updater unit 4 causes the updater unit 4 to transmit the prepare-to-switch command 204 in the app-specific update channel. The prepare-to-switch command 204 is received by both the first instance 11 and the second instance 12. During preparation, the first instance 11 transmits handover information in a handover message 205 in an app-internal topic to the second instance 12, and then proceeds to transmit a ready-to-switch message 206 in its instance-specific state topic. The second instance 12, upon receiving and processing the handover information contained in the handover message 205, after having initialized its control logic etc., also transmits a ready-to-switch message 207 in its instance-specific state topic.

The updater unit 4, upon receiving both ready-to-switch messages 206 and 207, transmits the switch command 208 in the app-specific update topic. The switch command 208 is received both by the first instance 11 and the second instance 12.

After that, optionally, the first instance 11 may transmit post-switch information in a post-switch message 209 in the app-internal topic to the second instance 12.

When the handover is complete, the second instance 12 may transmit a normal message 210 indicating its normal operation in its instance-specific state topic, and the first instance 11 may optionally transmit a shutdown message 211 indicating its shutting down in its instance-specific topic to the updater unit 4.

The updater unit 4 thus continuously remains informed about the respective states of the first instance 11 and the second instance 12 during handover.

If any of the ready-to-prepare message 203, the ready-to-switch message 207 or the normal message 210 is not received in due time by the updater unit 4, the updater unit 4 may transmit an abort message (not shown) in the app-specific update topic. The first instance 11, in response to receiving the abort-message in the app-specific update topic, may undo any preparation it has performed during the preparation state 107, may switch itself in if it has already been switched out, and may revert to the operation state 106 of normally operating. The updater unit 4 may further cause a node manager unit (not shown) of the embedded control device 1 to terminate the second instance 12, which is deemed to be faulty in this case.

It is noted that the timing diagram shown in Fig. 9 only shows messages 201-211 that are transmitted either in one of the instance-specific state topics, or in the app-specific update topic, or in the app-internal topic. Messages transmitted in the one or more control target-related topics are omitted for ease of understanding.

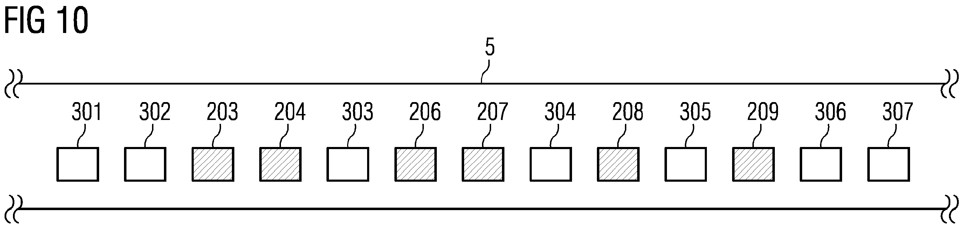

Fig. 10 shows a visualization of the message bus 5 and of messages transmitted on the message bus 5 in all topics according to exemplary embodiments.

Messages 301-307 are messages transmitted in one or more control target-related topics, the payloads of which may include input values, such as measured values, output values, such as setpoint values, control commands, and the like. Messages 301-307 relate to the control of the control target 2 that is performed by the embedded control device 1 (the control apps 11, 12 being executed thereon).

As can be seen in Fig. 10, the ready-to-prepare message 203, the prepare-to-switch command 204, the handover message 205, the ready-to-switch messages 206, 207, the switch command 208, and the post-switch message 209, are interspaced with the control target-related messages 301-307. That is, at any instance in time, a subscriber who is subscribed to some or all of the topics that exist of the message bus 5, receives exactly one of the messages 301-307, 201-211. All messages 301-307, 201-211 are serialized, and the relative temporal relationship between messages 301-307, 201-211 is the same for all subscribers. This serialization advantageously contributes to the effect that no control target-related message 301-307 is neither lost nor processed twice during the handover. It is always clear which of the first instance 11 or the second instance 12 is to process which of the control target-related messages 301-307.

According to embodiments of the invention, there has been described a mixed hardware/software architecture of an embedded control device 1 that advantageously enables smooth atomic handover from a first instance 11 of a control app and a second, updated instance 12 of the same control app, wherein the handover retains all state information and does not require downtime of the embedded control device 1 and/or the control target 2.

Features of the proposed architecture and the proposed handover protocol that enable to achieve these advantages include, in particular, the broker unit 4 that supplies a serialized, publish/subscribe topic-based message bus 5, as well as the fact that the updater unit 5 transmits state messages and state switch commands that implement the proposed handover protocol on the same message bus 5 that is used to transmit control target-related messages, and the fact that said message bus 5 is strictly serialized.

Furthermore, the disclosed architecture may allow for easy state transfers before and/or after the handover, as well as for recovery in the case of a faulty updated control app.

Although the present invention has been described in accordance with preferred embodiments, it is obvious for the person skilled in the art that modifications are possible in all embodiments.

One same control app, represented by a first instance 11 and a second instance 12, has been described in the exemplary embodiments. However, it will be appreciated that a plurality of different control apps may be executed concurrently on the embedded control device 1.

The control target 2 is not particularly limited and may include one or a plurality of controlled devices. Examples include entire power grids, power grid substations, power plants, generators, protective switches, meters, transformers, turbines, and the like.

The control logic of the control app is not particularly limited and may range from simple tasks such as tripping a protective switch after a certain number of overvoltage measurements to highly complex tasks such as controlling an autonomous vehicle and the like.

### Reference Numerals:

- 1: embedded control device
- 2: control target
- 3: broker unit
- 4: updater unit
- 5: message bus
- 6: computer program product
- 7: program code
- 8: interface unit
- 9: physical signal line
- 11: first instance (control app)
- 12: second instance (control app)
- 81: interface app
- 82: connector
- 101: initializing state
- 102: decision block
- 103: observing state
- 104: preparation state (second instance)
- 105: post-switch state (second instance)
- 106: operating state
- 107: preparation state (first instance)
- 108: post-switch state (first instance)
- 109: shutdown state
- 201: initializing message
- 202: observing message
- 203: ready-to-prepare message
- 204: prepare-to-switch command
- 205: handover message
- 206: ready-to-switch message (from first instance)
- 207: ready-to-switch message (from second instance)
- 208: switch command
- 209: post-switch message
- 210: normal message
- 211: shutdown message
- 301-307: control target-related messages
- S1-S3: method steps

## Claims

1. An embedded control device (1) configured to concurrently execute a number of control apps (11, 12) for controlling a control target (2), the embedded control device (1) comprising a number of units (3, 4), the number of units (3, 4) comprising:
a broker unit (3) configured to provide a message bus (5) enabling serialized publish/subscribe topic-based communication between any of the number of control apps (11, 12), the number of units (3, 4), and the control target (2); and
an updater unit (4) configured to:
- in response to a first instance (11) of one of the number of control apps (11, 12) being executed on the embedded control device (1), publish an app-specific update topic on the message bus (5); and
- when a second instance (12) of the same control app (11, 12) is executed on the embedded control device (1), cause a handover of control from the first instance (11) to the second instance (12) of the control app (11, 12) by transmitting a switch command in the app-specific update topic.

2. The embedded control device of claim 1,
**characterized in**
**that** the updater unit (4) is subscribed to an instance state wildcard topic on the message bus (5), and is further configured to:
- in response to receiving a ready-to-prepare message (203) in an instance-specific state topic of the second instance (12), transmit a prepare-to-switch command (204) in the app-specific update topic; and
- transmit the prepare-to-switch command in the app-specific update topic in response to having received respective ready-to-switch messages (206, 207) both in the instance-specific state topic of the second instance (12) and in an instance-specific state topic of the first instance (11).

3. The embedded control device of claim 2, **characterized by**
the updater unit (4) further being configured to, if any one of the ready-to-switch-messages (206, 207) is not received after a predetermined time from transmitting the prepare-to-switch command (204), not transmit the switch command (208), transmit an abort command in the app-specific update topic, and terminate the second instance (12) of the control app (11, 12).

4. The embedded control device of any of claims 1 to 3, **characterized by**
being configured to containerize the number of control apps (11, 12) such that the message bus (5) is the only means of communication available to the number of control apps (11, 12).

5. The embedded control device of any of claims 1 to 4, **characterized by**
the updater unit (4) and the broker unit (3) being implemented as respective ones of the number of apps executed on the embedded control device (1).

6. The embedded control device of any of claims 1 to 5, **characterized by**
comprising the first instance (11) of the one of the number of control apps (11, 12) loaded onto the embedded control device (1).

7. The embedded control device of any of claims 1 to 5, **characterized by**
comprising the first instance (11) and the second instance (12) of the one of the number of control apps (11, 12) executing on the embedded control device (1).

8. A computer program product (6) comprising a program code (7) that, when executed on the embedded control device (1) of any of claims 1 to 7, is configured to cause forming of the first instance (11) of the one of the number of control apps (11, 12), and is configured to cause forming of the second instance (12) of the one of the number of control apps (11, 12).

9. The computer program product of claim 8,
**characterized by**
the program code (7) being configured to cause that upon startup:
- the first instance (11) and the second instance (12) subscribe to the app-specific update topic,
- the first instance (11) enters an operating state (106) of controlling the control target (2) by communicating with the control target (2) through the message bus (5), and
- the second instance (12) enters an observing state (103) of passively observing communications related to the control target (2) on the message bus (5), and
- in response to receiving the switch command (208) in the app-specific update topic:
- the second instance (12) transitions from the observing state (103) to the operating state (106), and
- the first instance (11) transitions from the operating state (106) to a switched-out state (108, 109) of not operating the control target (2).

10. The computer program product of claim 9,
**characterized by**
the program code (7) being configured to cause that upon startup, the first instance (11) and the second instance (12) each publish a respective instance-specific state topic on the message bus (5);
the second instance (12) transmits a ready-to-prepare message (203) in its instance-specific state topic when a minimum required amount of said observing is completed, and
in response to receiving a prepare-to-switch command (204) in the app-specific update topic, each of the first instance (11) and the second instance (12) prepare for the handover and transmit a ready-to-switch message (206, 207) in their respective instance-specific state topics when the respective preparing is completed.

11. The computer program product of claim 10, **characterized by**
the preparing for the handover comprising the first instance (11) transmitting handover information to the second instance (12) in an app-internal topic on the message bus (5).

12. The computer program product of claim 10 or 11, **characterized by**
the program code (7) being configured to cause that in response to receiving the switch command (208) in the app-specific update topic:
- the second instance (12) transitions into a post-switch state (105) of continuing to observe the message bus (5) and waiting for receiving post-switch information from the first instance (11) in an app-internal topic before transitioning from the post-switch state (105) to the operating state (106), and
- the first instance (11), after transitioning from the operating state (106) to the post-switched state (108), transmits the post-switch information to the second instance (12) in the app-internal topic.

13. The computer program product of any of claims 10 to 12, **characterized by**
the program code (7) being configured to cause that in response to receiving the switch command (208) in the app-specific update topic:
- the second instance (12) transitions into a post-switch state (108) of continuing to observe the message bus (5) and waiting for an app-specific condition becoming true before transitioning from the post-switch state (105) to the operating state (106), and
- the first instance (11) remains in the operating state (106) and waits for the app-specific condition becoming true before transitioning from the operating state (106) to the shutdown state (109).

14. The computer program product of claims 11 and 13, **characterized in**
**that** information indicating the app-specific condition is included in the handover information transmitted from the first instance (11) to the second instance (12).

15. A method for controlling a control target (2), the method comprising:
executing (S1) the program code (7) of the computer program product (6) according to any of claims 8 to 14 on the embedded control device (1) of any of claims 1 to 7 to form the first instance (11) of the control app (11, 12); and
after the program code (7) has been updated (S2),
executing (S3) the updated program code (7) on the embedded control device (1) to form the second instance (12) of the control app (11, 12).
